# EUROPÄISCHE PATENTSCHRIFT

(11) **EP 2 634 539 B1**
(45) Veröffentlichungstag und Bekanntmachung des Hinweises auf die Patenterteilung: **09.01.2019**
(21) Anmeldenummer: 12194971.3
(22) Anmeldetag: 30.11.2012
(51) Int. Cl.: G01D 5/347

(54) **Längenmesseinrichtung**
Length measuring device
Dispositif de mesure de longueur

(30) Priorität: 01.03.2012 DE 102012203220
(43) Veröffentlichungstag der Anmeldung: 04.09.2013
(73) Patentinhaber: Dr. Johannes Heidenhain GmbH, 83301 Traunreut (DE)
(72) Erfinder: Schmöller, Markus, 83278 Traunstein (DE); Steber, Michael, 83324 Ruhpolding (DE); Kitano, Yusuke, Tokyo 102-0083 (JP)

(56) Entgegenhaltungen:
- EP-A2- 0 841 540
- JP-A- H03 282 310
- JP-A- 2010 249 602

## Beschreibung

Die Erfindung betrifft eine Längenmesseinrichtung nach dem Oberbegriff des Anspruchs 1.

Derartige Längenmesseinrichtungen werden gekapselte Längenmesseinrichtungen genannt und sie dienen zur Positionsmessung zweier relativ zueinander verschiebbarer Objekte. Gekapselte Längenmesseinrichtungen werden insbesondere bei Bearbeitungsmaschinen zur Messung der Relativbewegung eines Werkzeugs bezüglich eines zu bearbeitenden Werkstücks eingesetzt.

Derartige Längenmesseinrichtungen sind beispielsweise in der EP 0 418 212 A2 und der US 4,340,814 beschrieben. Die Längenmesseinrichtungen bestehen jeweils aus einem U-förmigen Hohlprofil mit zwei parallel zueinander verlaufenden Schenkeln, einem Boden sowie einer dem Boden gegenüberliegenden in Längsrichtung verlaufenden schlitzförmigen Öffnung. Diese Öffnung ist durch Dichtelemente abgedeckt, Innerhalb des Hohlprofils sind ein Maßstab sowie eine Abtasteinheit angeordnet, wobei die Abtasteinheit zur Positionsmessung relativ zum Maßstab in Längsrichtung verschiebbar ist. Die Abtasteinheit weist einen durch die Dichtlippen nach außen führenden schwertförmigen Mitnehmer auf. Die stirnseitigen Enden des Hohlprofils sind jeweils mit einem Endstück abgeschlossen, das auch zum Anbau des Hohlprofils an einem der zu messenden Objekte ausgebildet ist. Das Endstück weist einen Eintauchbereich auf, mit dem es in die lichte Öffnung des Hohlprofils eintaucht. Bei den Längenmesseinrichtungen gemäß dem genannten Stand der Technik erfolgt die Verbindung zwischen dem Hohlprofil und dem Endstück durch Verschrauben oder Verstiften der seitlichen Schenkel des U-förmigen Hohlprofils mit dem Eintauchbereich.

Bei der Längenmesseinrichtung gemäß der EP 0 841 540 B1 ist das Endstück ebenfalls zum Verschluss des Hohlprofils an einem seiner Enden sowie zum Anbau an ein zu messendes Objekt ausgebildet. Die Verbindung des Endstücks mit dem Hohlprofil erfolgt durch eine in Messrichtung wirkende formschlüssige Arretierung zwischen einem am Endstück angeordneten Einsatzteil und dem Hohlprofil.

Der Erfindung liegt die Aufgabe zugrunde eine Längenmesseinrichtung anzugeben, die kompakt aufgebaut ist und mit der eine reproduzierbare Positionsmessung ermöglicht wird.

Diese Aufgabe wird erfindungsgemäß durch die Merkmale des Anspruchs 1 gelöst.

Die erfindungsgemäß ausgebildete Längenmesseinrichtung umfasst ein sich in Längsrichtung erstreckendes Hohlprofil, das einen in Längsrichtung verlaufenden und mit Dichtelementen abgedeckten Schlitz aufweist. Innerhalb des Hohlprofils ist ein Maßstab mit einer Messteilung angeordnet, welche zur Positionsmessung von einer in Längsrichtung relativ zum Hohlprofil bewegbaren Abtasteinheit abtastbar ist. Das Hohlprofil ist lösbar mit zumindest einem Endstück verbunden, welches das Hohlprofil endseitig verschließt. Das Endstück ist auch zum Anbau des Hohlprofils an ein zu messendes Objekt ausgebildet. Zur Ausrichtung des Endstücks im Hohlprofil und zur Befestigung des Endstücks am Hohlprofil weist dieses einen Eintauchbereich auf, mit dem es in den Innenraum des Hohlprofils eintaucht. Die ortsfeste Verbindung zwischen dem Endstück und dem Hohlprofil erfolgt mittels eines Klemmstücks, das den Schlitz des Hohlprofils überspannt und das beidseitig des Schlitzes das Hohlprofil an dem Eintauchbereich des Endstücks fixiert.

Das Hohlprofil ist U-förmig ausgestaltet und weist zwei parallel zueinander verlaufende Schenkel und einen die Schenkel verbindenden Boden auf. Der Schlitz ist dem Boden gegenüberliegend angeordnet. An den beiden Schenkeln sind in Richtung des Schlitzes weisende Vorsprünge angeordnet, insbesondere einstückig angeformt.

Das Klemmstück ist mit dem Endstück verschraubt und die beiden Vorsprünge des Hohlprofils werden dadurch an den Eintauchbereich des Endstücks gedrängt und daran fixiert. Die ortsfeste Verbindung zwischen dem Endstück und dem Hohlprofil erfolgt somit durch Einklemmen der Vorsprünge zwischen dem Klemmstück und dem Eintauchbereich des Endstücks.

Vorteilhafte Ausgestaltungen der Erfindung sind in den abhängigen Ansprüchen sowie in der nachfolgenden Beschreibung angegeben.

Die Erfindung wird mit Hilfe eines Ausführungsbeispiels näher erläutert.

Dabei zeigt
- Figur 1: eine Längenmesseinrichtung im Teilschnitt;
- Figur 2: einen Querschnitt II-II der Längenmesseinrichtung gemäß Figur 1;
- Figur 3: eine perspektivische Ansicht der Längenmesseinrichtung in einer ersten Montageposition;
- Figur 4: eine perspektivische Ansicht der Längenmesseinrichtung in einer zweiten Montageposition und
- Figur 5: eine perspektivische Ansicht der Längenmesseinrichtung mit fertig montiertem Endstück.

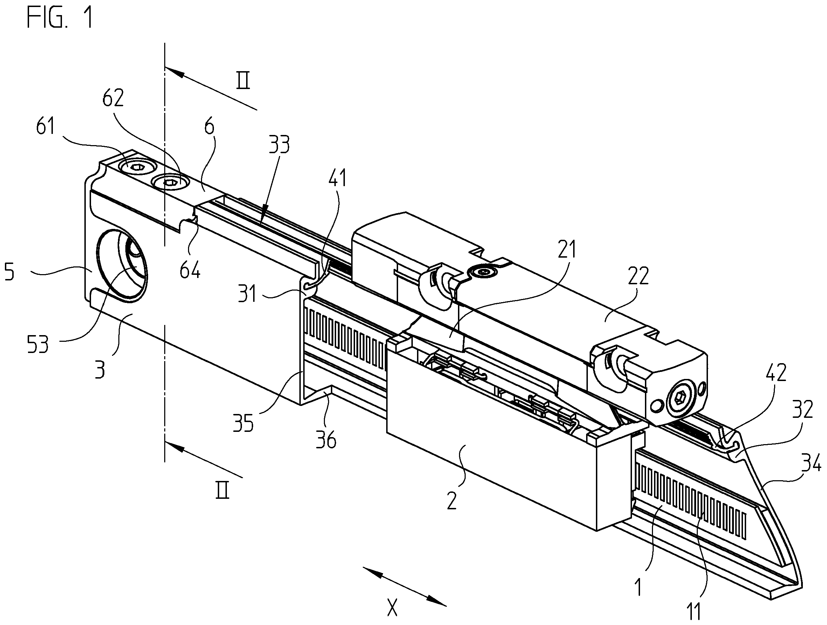

Die Erfindung wird anhand einer lichtelektrischen Längenmesseinrichtung näher erläutert. Diese in Figur 1 im Teilschnitt dargestellte Längenmesseinrichtung besteht aus den Komponenten Maßstab 1 und Abtasteinheit 2, die in Längsrichtung X relativ zueinander bewegbar sind. Zur Messung einer Position zweier in Längsrichtung X relativ zueinander verschiebbarer Objekte wird der Maßstab 1 an eines dieser Objekte und die Abtasteinheit 2 an das andere dieser beiden Objekte befestigt. Die Abtasteinheit 2 tastet bei der Positionsmessung eine Messteilung 11 des Maßstabs 1 ab und bildet daraus Positionsmesswerte. Die Messteilung 11 kann als Inkrementalspur mit einer Folge von gleichbeabstandeten Markierungen, als mehrspuriger Absolutcode oder als einspuriger Absolutcode mit einer in Längsrichtung X angeordneten absoluten Codierung, beispielsweise einer Pseudo-Random-Codierung, ausgebildet sein. Die Erfindung ist nicht auf das lichtelektrische Abtastprinzip beschränkt, die Messteilung kann auch induktiv, magnetisch oder kapazitiv abtastbar ausgestaltet sein.

Der Maßstab 1 ist in einem sich in Längsrichtung X erstreckenden Hohlprofil 3 geschützt untergebracht. Der Maßstab 1 ist am Hohlprofil 3 befestigt, indem er beispielsweise an einer Innenseite des Hohlprofils 3 fixiert ist, insbesondere durch einen Klebstoff. In Längsrichtung X verlaufend weist das Hohlprofil 3 einen Schlitz 33 auf, der durch dachförmig angeordnete lippenförmige Dichtelemente 41, 42 abgedeckt ist. Durch die Dichtelemente 41, 42 ragt ein schwertförmiger Mitnehmer 21, an dem die Abtasteinheit 2 befestigt ist. Außerhalb des Hohlprofils 3 ist an dem Mitnehmer 21 ein Montageelement 22 angeordnet, das dazu ausgelegt ist, an einem der beiden zu messenden Objekte befestigt zu werden, beispielsweise durch Anschrauben.

Das Hohlprofil 3 ist U-förmig ausgebildet und weist zwei parallel verlaufende Schenkel 34, 35 und einen die Schenkel 34, 35 verbindenden Boden 36 auf. Der Schlitz 33 ist dem Boden 36 gegenüberliegend angeordnet und wird von zwei an die Schenkel 34, 35 des Hohlkörpers 3 angeformten Vorsprüngen 31, 32 begrenzt.

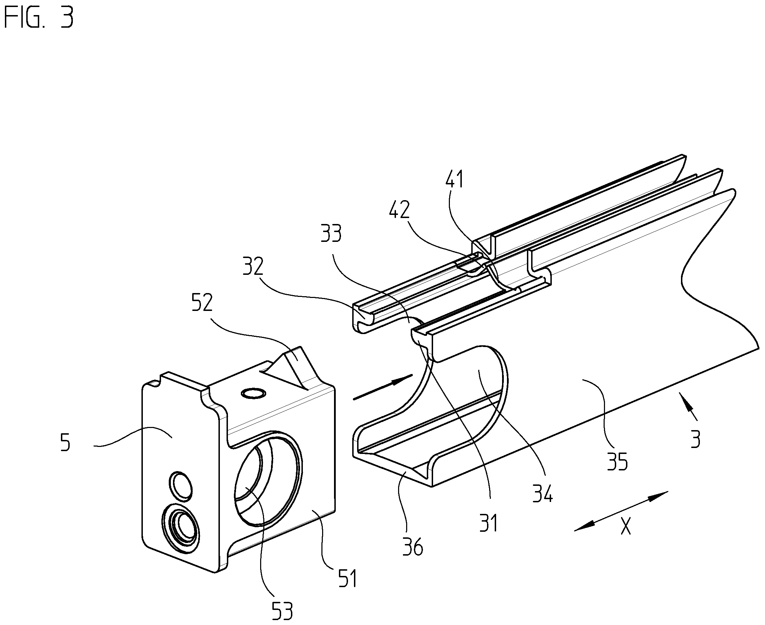

Die beiden stirnseitigen Enden des Hohlprofils 3 sind jeweils mit einem Endstück 5 abgeschlossen, wobei nur eines davon dargestellt ist. Das Endstück 5 weist einen Eintauchbereich 51 auf, mit dem es in den Innenraum des Hohlprofils 3 eintaucht. Dieser Eintauchbereich 51 ist in Figur 3 dargestellt. Der Querschnitt des Eintauchbereichs 51 ist an den Querschnitt des Hohlprofils 3 derart angepasst, dass die Innenflächen der beiden Schenkel 34, 35 und die Innenfläche des Bodens 36 an den Seitenflächen des Eintauchbereichs 51 anliegen. Die Außenkontur des Eintauchbereichs 51 entspricht also der Innenkontur des Hohlprofils 3.

Das Endstück 5 ist zum Anbau an einem der zu messenden Objekte ausgebildet. Hierzu weist das Endstück 5 eine Bohrung 53 für eine Befestigungsschraube oder für einen Bolzen auf. Anstelle der Bohrung kann in bekannter Weise auch ein Winkel, ein Bolzen oder eine Kugel am Endstück angeordnet sein, mit dem bzw. mit der das Hohlprofil am zu messenden Objekt befestigt werden kann.

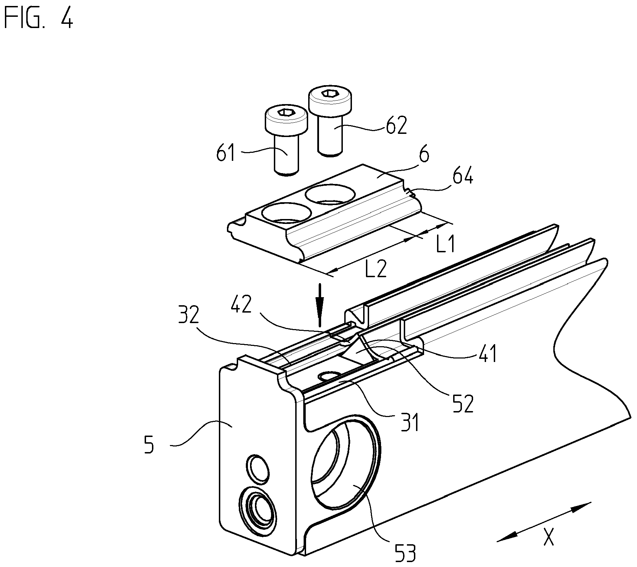

Figur 3 zeigt eine Montageposition, bei der das Endstück mit seinem Eintauchbereich 51 in das Hohlprofil 3 eingeschoben wird. In einem weiteren Montageschritt wird das Endstück 5 an dem Hohlprofil befestigt, wie in Figur 4 dargestellt ist. Die ortsfeste Fixierung des Endstücks 5 am Hohlprofil 3 erfolgt mittels eines Klemmstücks 6. Das Klemmstück 6 ist dazu ausgebildet, den Schlitz 33 zu überspannen und die beiden Vorsprünge 31, 32 an eine Fläche des Eintauchbereichs 51 des Endstücks 5 zu drängen und dort mittels Kraftschluss zu fixieren. Hierzu wird das Klemmstück 6 mit dem Endstück 5 verschraubt, beispielsweise mittels zweier in Figur 4 dargestellter Schrauben 61, 62. Die beiden dem Boden 36 gegenüberliegenden Vorsprünge 31, 32 werden also zwischen das Klemmstück 6 und dem Eintauchbereich 51 eingeklemmt und somit daran ortsfest fixiert.

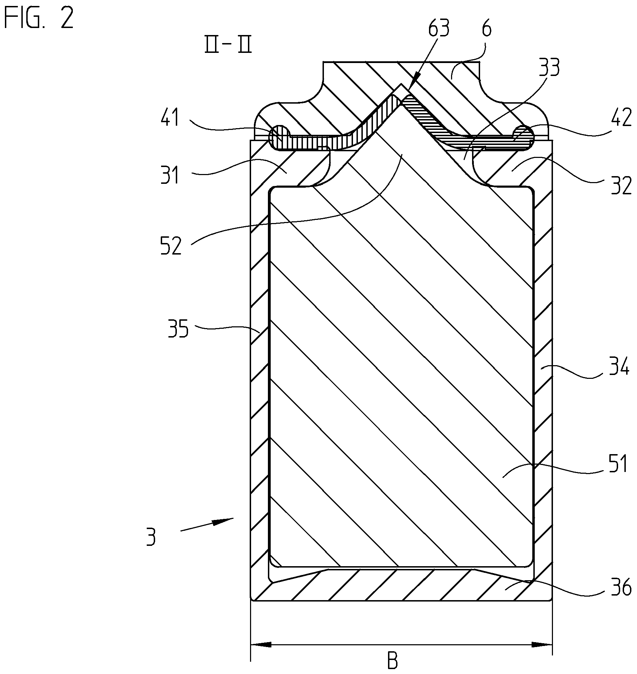

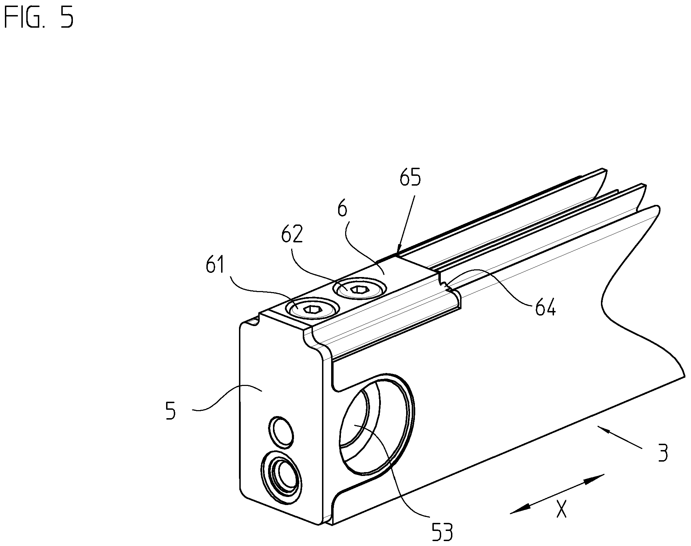

Diese Art der Fixierung ist besonders platzsparend realisierbar. Wie in Figur 2 und Figur 5 dargestellt ist, ist das Klemmstück 6 im fertig montierten Zustand innerhalb der durch die beiden Schenkel 34, 35 vorgegebenen Breite B des Hohlprofils 3 angeordnet. Die Außenabmessung des Hohlprofils 3 wird also ausschließlich von den beiden Schenkeln 34, 35 begrenzt. Wahlweise kann die Außenseite des Schenkels 34 oder des Schenkels 35 beim Anbau an ein zu messendes Objekt flächig an diesem angelegt werden, was eine besonders vibrationsfeste Verbindung garantiert.

Die Dichtelemente 41, 42 decken den Schlitz 33 dachförmig ab. Wie in den Figuren 2 bis 4 ersichtlich ist, weist der Eintauchbereich 51 des Endstücks 5, der diesen dachförmig angeordneten Dichtelementen 41, 42 gegenüberliegt, ebenfalls einen dachförmig geformten Bereich 52 auf, so dass sich die Dichtelemente 41, 42 daran anlegen. Weiterhin weist das Klemmstück 6 eine dazu korrespondierende Ausnehmung 63 auf. Beim Aufsetzen und Festschrauben des Klemmstücks 6 am Eintauchbereich 51 des Endstücks 5 werden die Dichtelemente 41, 42 zwischen dem dachförmigen Bereich 52 und der Ausnehmung 63 eingeklemmt, wodurch eine Verschiebung der Dichtelemente 41, 42 in Längsrichtung X verhindert wird und zusätzlich eine gute Abdichtung gewährleistet ist.

In Längsrichtung X gesehen sind die Dichtelemente 41, 42 nur innerhalb einer ersten Teillänge L1 des Klemmstücks 6 zwischen dem Eintauchbereich 51 und dem Klemmstück 6 angeordnet, wobei eine zweite sich daran anschließende Teillänge L2 des Klemmstücks 6 frei von Dichtelementen 41, 42 ist.

Indem das Klemmstück 6 den Schlitz 33 quer zur Längsrichtung X überspannt, kann es auch dazu genutzt werden ein Aufweiten des Schlitzes 33 zu verhindern. Hierzu sind am Klemmstück 6 Formschlusselemente 64, 65 angeordnet, die mit Bereichen des Hohlprofils 3 jeweils einen Formschluss bilden, der einer Aufweitung des Schlitzes 33 entgegenwirkt. Die Bereiche des Hohlprofils 3, mit denen die Formschlusselemente 64, 65 zusammenwirken, sind jeweils zwischen dem Schlitz 33 und einem der beiden Schenkel 34, 35 platziert. Durch die Formschlusselemente 64, 65 werden die beiden Schenkel 34, 35 stabil in ihrer vorgegebenen Lage, insbesondere parallel zueinander, gehalten.

## Patentansprüche

1. Längenmesseinrichtung, mit
einem sich in einer Längsrichtung (X) erstreckenden Hohlprofil (3), das einen in Längsrichtung (X) verlaufenden und mit Dichtelementen (41, 42) abgedeckten Schlitz (33) aufweist, und das U-förmig ausgestaltet ist und zwei parallel zueinander verlaufende Schenkel (34, 35), einen die Schenkel (34, 35) verbindenden Boden (36) sowie zwei dem Boden gegenüberliegende und an den Schenkeln (34, 35) angeordnete Vorsprünge (31, 32) aufweist;
einem innerhalb des Hohlprofils (3) angeordneten Maßstab (1) mit einer Messteilung (11), welche zur Positionsmessung von einer in Längsrichtung (X) relativ zum Hohlprofil (3) bewegbaren Abtasteinheit (2) abtastbar ist,
einem mit dem Hohlprofil (3) verbundenen Endstück (5) das zum Verschluss des Hohlprofils (3) an einem seiner Enden sowie zum Anbau an ein zu messendes Objekt ausgebildet ist, wobei das Endstück (5) einen Eintauchbereich (51) aufweist, mit dem es in den Innenraum des Hohlprofils (3) eintaucht;
**dadurch gekennzeichnet, dass**
das Endstück (5) mit dem Hohlprofil (3) mittels eines Klemmstücks (6) verbunden ist, das den Schlitz (33) überspannt und das beidseitig des Schlitzes (33) das Hohlprofil (3) an dem Eintauchbereich (51) des Endstücks (5) fixiert, wobei das Klemmstück (6) mit dem Endstück (5) verschraubt ist und das Klemmstück (6) die beiden Vorsprünge (31, 32) des Hohlprofils (3) an den Eintauchbereich (51) des Endstücks (5) drängt und durch Einklemmen zwischen dem Klemmstück (6) und dem Eintauchbereich (51) am Endstück (5) fixiert.

2. Längenmesseinrichtung nach Anspruch 1, **dadurch gekennzeichnet, dass** das Klemmstück (6) die Dichtelemente (41, 42) an den Eintauchbereich (51) des Endstücks (5) drängt.

3. Längenmesseinrichtung nach Anspruch 2, **dadurch gekennzeichnet, dass** die Dichtelemente (41, 42) dachförmig angeordnet sind und dass der den Dichtelementen (41, 42) gegenüberliegende Eintauchbereich (51) ebenfalls dachförmig geformt ist sowie das Klemmstück (6) eine dazu korrespondierende dachförmige Ausnehmung (63) aufweist.

4. Längenmesseinrichtung nach einem der Ansprüche 2 oder 3, **dadurch gekennzeichnet, dass** in Längsrichtung (X) gesehen die Dichtelemente (41, 42) nur innerhalb einer ersten Teillänge (L1) zwischen dem Eintauchbereich (51) und dem Klemmstück (6) angeordnet sind und eine zweite Teillänge (L2) des Klemmstücks (6) frei von Dichtelementen (41, 42) ist.

5. Längenmesseinrichtung nach einem der vorhergehenden Ansprüche, **dadurch gekennzeichnet, dass** das Klemmstück (6) mit dem Hohlprofil (3) beidseits des Schlitzes (33) jeweils einen Formschluss bildet, der einer Aufweitung des Schlitzes (33) entgegenwirkt.

6. Längenmesseinrichtung nach einem der vorhergehenden Ansprüche, **dadurch gekennzeichnet, dass** das Klemmstück (6) eine Breite aufweist, die kleiner oder gleich der durch die beiden Schenkel (34, 35) vorgegebenen Breite (B) des Hohlprofils (3) ist.

## Claims

1. Length measuring device, comprising
a hollow profile (3) extending in a longitudinal direction (X), which has a slot (33) extending in the longitudinal direction (X) and covered by sealing elements (41, 42), and which is configured in a U-shape and has two limbs (34, 35) extending parallel to each other, a base (36) connecting the limbs (34, 35) and two projections (31, 32) located opposite the base and arranged on the limbs (34, 35),
a scale (1) arranged within the hollow profile (3) having a measuring graduation (11), which can be scanned for the position measurement by a scanning unit (2) that can be moved in the longitudinal direction (X) relative to the hollow profile (3), an end piece (5) that is connected to the hollow profile (3) and is designed to close the hollow profile (3) at one of its ends and to be attached to an object to be measured, the end piece (5) having an insertion region (51) with which it dips into the interior of the hollow profile (3),
**characterized in that**
the end piece (5) is connected to the hollow profile (3) by means of a clamping piece (6), which spans the slot (33) and which, on both sides of the slot (33), fixes the hollow profile (3) to the insertion region (51) of the end piece (5), wherein the clamping piece (6) is screwed to the end piece (5) and the clamping piece (6) forces the two projections (31, 32) of the hollow profile (3) onto the insertion region (51) of the end piece (5) and fixes them to the end piece (5) by clamping between the clamping piece (6) and the insertion region (51).

2. Length measuring device according to Claim 1, **characterized in that** the clamping piece (6) forces the sealing elements (41, 42) onto the insertion region (51) of the end piece (5).

3. Length measuring device according to Claim 2, **characterized in that** the sealing elements (41, 42) are arranged in the shape of a roof, and **in that** the insertion region (51) opposite the sealing elements (41, 42) is likewise formed in the shape of a roof, and the clamping piece (6) has a roof-shaped recess (63) corresponding thereto.

4. Length measuring device according to either of Claims 2 and 3, **characterized in that**, as viewed in the longitudinal direction (X), the sealing elements (41, 42) are arranged between the insertion region (51) and the clamping piece (6) only within a first partial length (L1), and a second partial length (L2) of the clamping piece (6) is free of sealing elements (41, 42).

5. Length measuring device according to one of the preceding claims, **characterized in that** the clamping piece (6) respectively forms a form fit with the hollow profile (3) on both sides of the slot (33), which counteracts a widening of the slot (33).

6. Length measuring device according to one of the preceding claims, **characterized in that** the clamping piece (6) has a width which is smaller than or equal to the width (B) of the hollow profile (3) predefined by the two limbs (34, 35).

## Revendications

1. Dispositif de mesure de longueur, comprenant
un profilé creux (3) qui s'étend dans une direction longitudinale (X), lequel possède une fente (33) qui se déroule dans la direction longitudinale (X) et qui est recouverte d'éléments d'étanchéité (41, 42), et qui est configuré en forme de U et qui possède deux branches (34, 35) se déroulant parallèlement l'une à l'autre, un fond (36) qui relie les branches (34, 35) ainsi que deux parties saillantes (31, 32) à l'opposé du fond et disposées sur les branches (34, 35),
une règle graduée (1) disposée à l'intérieur du profilé creux (3), munie d'une graduation de mesure (11) qui, pour une mesure de position, peut être palpée par une unité de palpage (2) pouvant être déplacée dans la direction longitudinale (X) par rapport au profilé creux (3),
un embout (5) relié au profilé creux (3), lequel est configuré pour fermer le profilé creux (3) à l'une de ses extrémités ainsi que pour être monté sur un objet à mesurer, l'embout (5) possédant une zone plongeante (51) avec laquelle il pénètre dans l'espace intérieur du profilé creux (3),
**caractérisé en ce que**
l'embout (5) est relié au profilé creux (3) au moyen d'une pièce de serrage (6) qui recouvre la fente (33) et qui fixe des deux côtés de la fente (33) le profilé creux (3) à la zone plongeante (51) de l'embout (5), la pièce de serrage (6) étant vissée à l'embout (5) et la pièce de serrage (6) pressant les deux parties saillantes (31, 32) du profilé creux (3) contre la zone plongeante (51) de l'embout (5) et les fixant par serrage entre la pièce de serrage (6) et la zone plongeante (51) à l'embout (5).

2. Dispositif de mesure de longueur selon la revendication 1, **caractérisé en ce que** la pièce de serrage (6) presse les éléments d'étanchéité (41, 42) contre la zone plongeante (51) de l'embout (5).

3. Dispositif de mesure de longueur selon la revendication 2, **caractérisé en ce que** les éléments d'étanchéité (41, 42) sont disposés en forme de toit et **en ce que** la zone plongeante (51) qui se trouve à l'opposé des éléments d'étanchéité (41, 42) est également façonnée en forme de toit et la pièce de serrage (6) possède un évidement (63) en forme de toit correspondant à cela.

4. Dispositif de mesure de longueur selon l'une des revendications 2 ou 3, **caractérisé en ce que** vus dans la direction longitudinale (X), les éléments d'étanchéité (41, 42) sont uniquement disposés à l'intérieur d'une première longueur partielle (L1) entre la zone plongeante (51) et la pièce de serrage (6) et une deuxième longueur partielle (L2) de la pièce de serrage (6) est dépourvue des éléments d'étanchéité (41, 42).

5. Dispositif de mesure de longueur selon l'une des revendications précédentes, **caractérisé en ce que** la pièce de serrage (6), avec le profilé creux (3), forme respectivement un assemblage par complémentarité de formes des deux côtés de la fente (33), lequel s'oppose à un élargissement de la fente (33).

6. Dispositif de mesure de longueur selon l'une des revendications précédentes, **caractérisé en ce que** la pièce de serrage (6) présente une largeur qui est inférieure ou égale à la largeur (B) du profilé creux (3) qui est prédéfinie par les deux branches (34, 35).
